# FASCICULE DE BREVET EUROPEEN

(11) **EP 2 114 838 B1**
(45) Date de publication et mention de la délivrance du brevet: **26.03.2014**
(21) Numéro de dépôt: 08761983.9
(22) Date de dépôt: 25.01.2008
(51) Int. Cl.: C03C 1/10, C03C 3/087, C03C 4/02

(54) **PROCEDE DE FABRICATION DU VERRE**
HERSTELLUNGSVERFAHREN FÜR GLASS
GLASS MAKING PROCESS

(30) Priorité: 26.01.2007 FR 0752915
(43) Date de publication de la demande: 11.11.2009
(73) Titulaire: SAINT-GOBAIN EMBALLAGE, 92400 Courbevoie (FR)
(72) Inventeur: ABENSOUR, Sylvie, F-95680 Montlignon (FR); MAQUIN, Bertrand, F-75015 Paris (FR)
(74) Mandataire: Teyssedre, Laurent
(86) Numéro de dépôt international: PCT/FR2008/050118
(87) Numéro de publication internationale: WO 2008/104653

(56) Documents cités:
- DE-A1-102004 001 729
- FR-A- 1 385 272
- DATABASE WPI Week 200437 Thomson Scientific, London, GB; AN 2004-395888 XP002458234 & JP 2004 143003 A (ISHIZUKA GLASS KK) 20 mai 2004 (2004-05-20)

## Description

La présente invention concerne la fabrication de verre rouge, en particulier de verre dont la teinte rouge est obtenue en faisant subir à un verre contenant du cuivre un traitement thermique (thermocoloration).

Il est connu d'obtenir des verres de couleur rouge en ajoutant dans les matières premières de formation du verre de petites quantités de cuivre, puis en faisant subir à l'article de verre formé (verre plat ou creux) un traitement thermique, généralement autour de 600°C, afin de générer ladite couleur.

Le traitement thermique à l'origine de la coloration a pour effet de faire précipiter au sein du verre des nanoparticules de cuivre métallique, lesquelles vont diffuser et absorber le rayonnement lumineux dans certains domaines de longueurs d'ondes.

L'ajout du cuivre est généralement réalisé par apport d'oxyde de cuivre au sein du mélange de matières premières pulvérulentes, avant la mise en oeuvre du procédé de fusion. On parle alors de « coloration en bassin ». Dans une mise en oeuvre continue, ce procédé présente toutefois des désavantages. En règle générale, un four de fusion de verre alimente plusieurs lignes de fabrication d'objets en verre, notamment de bouteilles ou flacons. Une coloration en bassin implique donc nécessairement que toutes les lignes de fabrication fournissent des objets de teinte identique. Le four de fusion du verre étant rempli d'une grande quantité de verre fondu contenant du cuivre, et compte tenu de l'existence de mouvements de convection au sein même de la masse de verre fondu, les changements de teinte sont également très longs et peuvent durer plusieurs jours entiers pendant lesquels le verre ne peut être vendu car il ne correspond à aucune teinte référencée. Ces différentes considérations font que la coloration en bassin n'est pas une alternative économiquement viable dans le cas de productions en faibles quantités.

Pour résoudre ce problème, il est connu de manière générale d'employer un procédé de coloration dit « en feeder », dans lequel les matières colorantes sont introduites, généralement sous la forme de frittes de verre ou d'agglomérés, dans les canaux de distribution ou « feeders » situés en aval du four de fusion et en amont de chaque ligne de fabrication. Ainsi, il est possible d'obtenir dans le four de fusion un verre de base unique (généralement incolore) puis de colorer ce verre de base dans un feeder donné, lequel n'alimente qu'une seule ligne de fabrication. En outre, il n'y a pas de mouvements de convection dans le feeder, et l'arrêt de la coloration dans un feeder permet en quelques heures de retrouver un verre incolore. Il est ainsi économiquement possible par le biais de ce procédé de fabriquer de petites séries et de gagner en souplesse de production.

L'obtention de verre rouge au cuivre par ce procédé s'est toutefois heurtée pendant de nombreuses années à des difficultés techniques liées au contrôle de l'oxydo-réduction du verre. Le cuivre doit en effet être réduit lors de son incorporation dans le verre pour obtenir une précipitation en cuivre métallique et donc la couleur souhaitée. Or le verre de base est souvent oxydé et contient des ions sulfates, et son mélange avec des espèces réduites, par le biais de réaction d'oxydo-réduction complexes, génère une grande quantité de bulles de SO₂ (« rebullage ») au sein du verre.

Le document JP 2004-143003 enseigne qu'afin de contourner ces difficultés, il est nécessaire d'utiliser un verre de base réduit de teinte ambre, défini par un rédox supérieur à 0,4. Le rédox, défini comme le rapport entre la teneur en fer ferreux et la teneur en fer total, est un moyen de mesurer ou contrôler le degré d'oxydo-réduction du verre. Compte tenu du rédox élevé, les verres de base employés sont de teinte ambre, laquelle est due à la présence en très faibles teneurs (souvent quelques ppm ou dizaines de ppm) d'ions sulfure (S²⁻). Le verre de base, déjà réduit, ne provoque alors pas de rebullage lors de son mélange dans le feeder avec les matières colorantes.

Ce procédé n'est toutefois pas dénué d'inconvénients, car l'emploi d'un verre de base de couleur ambre n'est pas forcément compatible avec les teintes souhaitées pour les autres lignes de fabrication.

L'invention a pour but de résoudre ces inconvénients en proposant un procédé de fabrication de verre rouge au cuivre comprenant les étapes consistant à :
- obtenir une masse de verre fondu incolore, exempt de sulfures, dont la teneur massique en oxyde de fer est comprise entre 0,01 et 0,15%, puis
- acheminer ladite masse de verre fondu dans un canal de distribution, dans lequel de l'oxyde de cuivre et de l'oxyde d'étain sont ajoutés à ladite masse de verre fondu, la pression partielle d'oxygène dans ladite masse de verre fondu étant comprise entre 10⁻⁷ et 10⁻⁴, puis,
- former à partir de ladite masse de verre fondu des objets en verre, notamment des bouteilles ou flacons, puis,
- faire subir auxdits objets en verre un traitement thermique de manière à développer une teinte rouge.

Les inventeurs ont en effet mis en évidence que, contrairement à l'enseignement de la demande JP 2004-143003, il était possible d'obtenir par coloration en feeder des verres rouges au cuivre à partir d'un verre de base incolore et non ambre, le point crucial étant de parfaitement contrôler la pression partielle en oxygène dans la masse de verre fondu. Pour une pression partielle d'oxygène trop faible, la présence de sulfures et donc d'une coloration ambre sont difficilement évitables. Pour une pression partielle d'oxygène au contraire trop élevée, une génération importante de bulles lors de l'ajout des espèces à base de cuivre et d'étain provoque une génération considérable de défauts dans les objets en verre finaux.

Le verre de base étant incolore et non ambre comme dans l'art antérieur précité, le procédé selon l'invention présente l'avantage de permettre la fabrication sur les autres lignes de verre blanc incolore, ou de tout type de verre coloré par coloration feeder.

Le verre obtenu est de préférence un verre de type silico-sodo-calcique, donc contenant comme composants principaux SiO₂, CaO et Na₂O. La masse de verre fondu est de préférence obtenue en mélangeant des matières premières comprenant du sable, du calcaire, du carbonate de sodium et un sulfate. D'autres matières premières telles que du feldspath ou de la dolomie sont avantageusement ajoutées au mélange de matières premières pour apporter des oxydes minoritaires tels que Al₂O₃, K₂O ou MgO. L'oxyde de fer est avantageusement le seul oxyde susceptible de conférer une coloration qui est présent dans la masse de verre fondu, car il serait ensuite délicat d'obtenir la teinte rouge désirée. Le verre fondu ne contient de préférence pas de métaux lourds tels que le plomb ou cadmium.

Le sulfate, qui est généralement du sulfate de sodium ou de calcium (gypse), est particulièrement apprécié car il sert à accélérer la fusion du verre et affiner le verre, c'est-à-dire à éliminer les inclusions gazeuses emprisonnées dans le verre lors de la décarbonatation des matières premières.

Le rapport entre le poids de sulfate introduit (exprimé sous la forme SO₃) et le poids de sable est avantageusement supérieur ou égal à 0,3%, voire 0,4% et/ou inférieure ou égale à 0,6%, voire 0,5%, de manière à optimiser les effets susmentionnés. Le contrôle très précis de la pression partielle d'oxygène qui est réalisé selon l'invention permet cet ajout important de sulfate sans craindre la formation de sulfures, lesquels sont extrêmement colorants même pour de très faibles teneurs. Jusqu'à présent la teneur en sulfate introduit était réduite au maximum, voire nulle, lorsqu'il s'agissait de fabriquer du verre rouge au cuivre en coloration bassin, car la formation de sulfures était considérée comme inévitable compte tenu du caractère nécessairement réduit du verre. Les inventeurs ont pu toutefois démontrer qu'en coloration feeder, la mise en oeuvre du procédé selon l'invention permettait au contraire d'employer des teneurs élevées en sulfate, générant ainsi une augmentation de tirée et une amélioration de la qualité en terme d'inclusions gazeuses résiduelles dans le verre, sans perturber la coloration de ce dernier.

La teneur massique en oxyde de fer du verre de base est de préférence supérieure ou égale à 0,012% voire 0,015% pour des raisons de coût des matières premières. Elle est de préférence inférieure ou égale à 0,1%, voire 0,05% et même 0,02%, les teneurs élevées en oxyde de fer conduisant à des colorations vertes ou bleues indésirables. L'oxyde de fer est inévitablement présent dans le sable, et la teneur minimale de 0,01% correspond aux teneurs les plus basses que l'on puisse atteindre compte tenu des matières premières existant sur le marché à un coût raisonnable.

La pression partielle d'oxygène dans la masse de verre fondu lors de l'ajout des oxydes de cuivre et d'étain est de préférence supérieure ou égale à 10^{-6,5}, voire 10⁻⁶, et/ou inférieure ou égale à 10^{-4,5}, voire 10⁻⁵. Une trop faible pression partielle d'oxygène est en effet susceptible de générer des sulfures au sein de la masse de verre, tandis qu'une pression partielle d'oxygène élevée ne permettra pas la génération de la couleur rouge désirée. La température de la masse de verre fondu dans le canal de distribution lors de l'ajout des oxydes de cuivre et d'étain est généralement comprise entre 1250 et 1350°C, notamment entre 1280 et 1320°C. Pour cette raison, les pressions partielles d'oxygène données pour la masse de verre fondu sont généralement mesurées à 1300°C.

Cette pression partielle est régulée par l'ajout dans les matières premières d'éléments oxydants ou réducteurs, en particulier les sulfates ou des nitrates (oxydants) et du coke, ou encore du sucre ou de l'urée (réducteurs). Le sulfate (notamment le sulfate de sodium) et le coke sont les éléments respectivement oxydants et réducteurs préférés.

La pression partielle d'oxygène dans une masse de verre fondu est généralement mesurée à l'aide de dispositifs mettant en oeuvre la mesure de la force électromotrice entre une électrode de référence et une électrode de mesure. Elle peut être mesurée en ligne dans le canal de distribution à l'aide par exemple du dispositif commercialisé sous le nom de « ReadOX » par la société Read-Ox & Consultancy B.V. Elle peut également être mesurée hors ligne, par exemple dans un creuset, à l'aide notamment du dispositif commercialisé sous le nom de « Rapidox » par la société Glass Service, Inc.

Dans le canal de distribution (ou feeder), l'oxyde de cuivre, généralement sous forme CuO et/ou Cu₂O, et l'oxyde d'étain, généralement sous forme SnO et/ou SnO₂, sont ajoutés à la masse de verre fondu, de préférence sous forme de frittes de verre ou d'agglomérés. La température de la masse de verre fondu est alors de préférence comprise entre 1250 et 1350°C, notamment entre 1280 et 1320°C, comme indiqué précédemment.

Les frittes de verre sont de petits fragments d'un verre spécial dont la composition est telle qu'il est susceptible de fondre rapidement à la température du verre dans le feeder. Ces frittes sont généralement à base de borosilicates d'alcalins, les fortes teneurs en oxydes de bore et de sodium permettant cette fusion rapide. Dans les frittes de verre est dissoute une quantité la plus élevée possible d'oxyde colorant. Les agglomérés sont au contraire préparés en liant des particules d'oxyde colorant par un silicate alcalin liquide qui est séché par la suite. Les agglomérés permettent en général d'incorporer une plus grande quantité d'oxyde de colorant.

Des dispositifs d'agitation permettent d'homogénéiser le verre dans le feeder afin d'éviter toute hétérogénéité de couleur dans l'objet final. Pour faciliter l'homogénéisation du verre, il est en tout cas préférable que la teneur totale en frittes ou agglomérés soit inférieure ou égale à 10%, notamment 5%, voire 3 ou même 2% par rapport au poids de verre de base.

Une seule fritte contenant à la fois l'oxyde de cuivre et l'oxyde d'étain peut être employée. Il est toutefois préférable d'utiliser une fritte différente par oxyde, pour les raisons indiquées dans la suite du texte.

La teneur massique en oxyde de cuivre contenue dans le verre final (exprimé par convention sous la forme Cu₂O, même si un mélange CuO/Cu₂O est généralement présent) est de préférence supérieure ou égale à 0,1%, voire 0,15% et/ou inférieure ou égale à 0,3%, voire 0,25%. De trop faibles teneurs en oxyde de cuivre ne permettent pas d'obtenir une teinte rouge très prononcée, tandis que de trop fortes teneurs conduisent au contraire à une teinte particulièrement soutenue et sombre.

L'oxyde d'étain (exprimé par convention sous la forme SnO) est essentiel pour obtenir la couleur rouge visée, car il agit comme agent réducteur vis-à-vis de l'oxyde de cuivre de manière à le réduire en cuivre métallique lors du traitement thermique ultérieur. Sa teneur massique est de préférence supérieure ou égale à 0,1, voire 0,2%. Elle est de préférence inférieure ou égale à 0,7, voire 0,6%. De trop fortes teneurs ont en effet tendance à augmenter le coût du verre fini, tout en n'étant pas nécessairement compatibles avec un faible taux d'introduction de frittes (teneur en frittes par rapport au poids de verre de base). Une quantité minimale d'oxyde d'étain est toutefois nécessaire pour obtenir la couleur rouge désirée.

Compte tenu de la limite susmentionnée en terme de teneur totale en frittes ou agglomérés introduite, la fritte contenant de l'oxyde de cuivre contient de préférence entre 15 et 30% en poids d'oxyde de cuivre (exprimé sous la sous forme Cu₂O, même si elle contient en général un mélange CuO/Cu₂O). La fritte contenant de l'oxyde d'étain contient de préférence entre 15 et 30% en poids d'oxyde d'étain (exprimé sous la sous forme SnO, même si la fritte contient en général un mélange SnO/SnO₂). Ces teneurs étant très élevées, il est par conséquent difficile d'incorporer les deux oxydes dans une seule et unique fritte.

En outre, il est préférable pour éviter tout rebullage intempestif de contrôler la pression partielle d'oxygène des frittes elles-mêmes. La fritte contenant l'oxyde de cuivre possède une pression partielle d'oxygène mesurée à une température de 1100°C de préférence comprise ente 10⁻⁴ et 10⁻¹, voire entre 10⁻⁴ et 10⁻². Une valeur de l'ordre de 10⁻³ est préférée car elle correspond approximativement à la pression partielle d'équilibre entre l'oxyde cuivreux et le cuivre métallique. La fritte contenant l'oxyde d'étain possède une pression partielle d'oxygène mesurée à une température de 1100°C de préférence comprise ente 10⁻⁹ et 10⁻⁷. Une valeur de l'ordre de 10⁻⁸ est préférée car elle correspond approximativement à la pression partielle d'équilibre entre l'oxyde stannique et l'oxyde stanneux.

D'autres oxydes peuvent également être ajoutés à la masse de verre fondu dans le canal de distribution. L'oxyde de bismuth (Bi₂O₃) est avantageusement ajouté, sous forme de frittes ou d'agglomérés. Cet oxyde favorise l'apparition de la couleur rouge lors du traitement thermique, peut-être en agissant comme agent de nucléation pour les particules de cuivre métallique. La teneur massique en oxyde de bismuth, exprimé sous la forme Bi₂O₃, dans le verre final est de préférence compris entre 0,02 et 0,20%, notamment entre 0,05 et 0,15%. La pression partielle d'oxygène dans la fritte, mesurée à une température de 1100°C, est avantageusement de l'ordre de 10⁻⁵ à 10⁻³, notamment de l'ordre de 10⁻⁴. La teneur en oxyde de bismuth dans la fritte est avantageusement comprise entre 15 et 30% en poids. En complément ou en substitution à l'oxyde de bismuth, des éléments du type platinoïdes tels que le platine ou le palladium, peuvent également agir comme agents de nucléation. Selon un mode de réalisation, caractérisé par une teinte rouge moins soutenue, on n'ajoute pas d'oxyde de bismuth à la masse de verre fondu.

A l'issue du canal de distribution, le verre fondu est formé par les techniques connues de l'homme du métier, pour obtenir des objets en verre tels que bouteilles, flacons, briques de verre en objets en verre plat.

Le traitement thermique auquel l'objet en verre obtenu est soumis pour développer la teinte rouge correspond de préférence au traitement habituel de recuisson auquel est soumis tout objet en verre après l'étape de formage. La recuisson consiste à soumettre le verre à une température généralement comprise entre 500 et 600°C, puis à le refroidir de manière lente et contrôlée. Ce traitement, habituellement réalisé dans un four de recuisson appelé « arche de recuisson » ou étenderie (dans le cas du verre plat), permet d'éliminer les contraintes mécaniques générées dans le verre lors du formage. Le fait de pouvoir développer la couleur rouge durant cette étape de recuisson permet de s'affranchir de tout traitement thermique additionnel, qui générerait un surcoût important.

Le verre rouge obtenu par le procédé selon l'invention, présente de préférence une transmission lumineuse sous illuminant C comprise entre 5 et 30%, notamment entre 10 et 40% pour une épaisseur de 3 mm. Les coordonnées colorimétriques (L*, a*, b*) sous illuminant C sont de préférence respectivement comprises entre 30 et 70, 35 et 70 et 20 et 65.

Le procédé selon l'invention peut être mis en oeuvre à l'aide des différents types de fours de fusion et de canaux de distribution connus de l'homme du métier. Les fours et canaux sont généralement réalisés à l'aide de matériaux réfractaires tels que la zircone, l'alumine ou les solutions solides d'oxydes d'aluminium, de zirconium et de silicium. L'énergie nécessaire à l'obtention de la masse de verre fondu peut être générée par un ou plusieurs brûleurs, notamment aériens, c'est-à-dire disposés au-dessus du bain de verre, ou par des électrodes disposées dans le bain de verre.

L'invention est illustrée à l'aide des exemples non-limitatifs suivants.

### EXEMPLE 1

Une masse de verre fondu dont la composition massique est indiquée dans le tableau 1 ci-après est obtenue dans un four classiquement employé dans le domaine de la fabrication de bouteilles en verre en mélangeant du sable du feldspath, du carbonate de sodium, du sulfate de sodium et du calcaire et en portant l'ensemble à une température d'au moins 1450°C à l'aide de brûleurs.

**Tableau 1**

| | |
|---|---|
| SiO₂ | 72,3 |
| Al₂O₃ | 1,8 |
| Fe₂O₃ | 0,02 |
| CaO | 12,2 |
| MgO | 0,2 |
| Na₂O | 12,5 |
| K₂O | 0,8 |

Le verre de base est un verre clair du type silico-sodo-calcique contenant une faible quantité d'oxyde de fer comme seul oxyde colorant. La fusion est facilitée par l'usage de sulfate de sodium et de coke, la pression partielle d'oxygène étant toutefois contrôlée de manière à éviter la formation de sulfures. Le poids de sulfate de sodium introduit relativement au poids de sable est de 0,8%, correspondant à un poids de sulfate (exprimé sous la forme SO₃) rapporté au poids de sable de 0,45%.

La masse de verre fondu est acheminée (dans le cadre d'un procédé continu) vers des canaux de distribution alimentant chacun plusieurs machines de formage de bouteilles, l'un desdits canaux étant pourvu d'une installation dédiée à l'ajout de frittes colorantes. Ce type d'installation est classiquement utilisé sur les lignes de fabrication de bouteilles en verre ; il est par conséquent bien connu de l'homme du métier. La pression partielle d'oxygène dans le canal de distribution est mesurée à l'aide d'une sonde commercialisée sous le nom « ReadOX » par la société Read-Ox & Consultancy B.V. A 1300°C, température régnant dans le canal lors de l'ajout des frittes, la pression partielle oxygène est de 10^{-4,3}. Trois frittes sont ajoutées au verre de base, chacune comportant respectivement de l'oxyde de cuivre en une teneur massique de 22,5% (l'oxyde de cuivre étant exprimé sous la forme CuO), de l'oxyde d'étain en une teneur massique de 22,5% (l'oxyde d'étain étant exprimé sous la forme SnO₂), de l'oxyde de bismuth en une teneur massique de 22,5% (l'oxyde de bismuth étant exprimé sous la forme Bi₂O₃). Les pressions partielles d'oxygène mesurées à une température de 1100°C à l'aide de la sonde « Rapidox » commercialisée par la société Glass Service, Inc sont respectivement de 10^{-2,2}, 10^{-8,5} et 10⁻⁴.

La teneur en frittes par rapport au poids de verre de base est de 1,2% pour la fritte au cuivre, 2,7% pour la fritte à l'étain et 0,6% pour la fritte au bismuth, les teneurs pondérales en oxydes de cuivre, d'étain et de bismuth dans le verre final étant par conséquent respectivement de 0,27% (exprimée sous la forme CuO), 0,6% (exprimée sous la forme SnO₂) et 0,13% (exprimée sous la forme Bi₂O₃).

Après formage, les bouteilles obtenues sont acheminées vers une arche de recuisson de manière à leur faire subir un traitement thermique (appelé recuisson) destiné à relâcher les contraintes mécaniques dues au formage. La couleur rouge désirée est obtenue à l'aide de ce traitement de recuisson.

### EXEMPLE 2

L'exemple 2 se distingue de l'exemple 1 par le fait que la pression partielle d'oxygène du verre de base à 1300°C, mesurée dans le canal de distribution, est de 10^{-5,3}. Cette pression partielle d'oxygène plus faible est obtenue par l'ajout d'une quantité de coke plus élevée.

Les mêmes frittes colorantes sont employées, mais les teneurs en frittes par rapport au poids de verre de base sont différentes : 1,0% pour la fritte au cuivre, 2,4% pour la fritte à l'étain et 0,4% pour la fritte au bismuth, les teneurs pondérales en oxydes de cuivre, d'étain et de bismuth dans le verre final étant par conséquent respectivement de 0,22% (exprimée sous la forme CuO), 0,55% (exprimée sous la forme SnO₂) et 0, 1 % (exprimée sous la forme Bi₂O₃).

Après révélation de la couleur lors du traitement de recuisson, le verre présente une coloration rouge plus prononcée que dans le cas de l'exemple 1, alors même que la teneur en oxyde de cuivre est plus faible. L'emploi d'un verre de base plus réduit (mais néanmoins exempt de sulfures) permet donc la formation d'un plus grand nombre de nanoparticules de cuivre métallique à l'origine de la coloration.

## Revendications

1. Procédé de fabrication de verre rouge au cuivre comprenant les étapes consistant à :
- obtenir une masse de verre fondu incolore, exempt de sulfures, dont la teneur massique en oxyde de fer est comprise entre 0,01 et 0,15%, puis
- acheminer ladite masse de verre fondu dans un canal de distribution, dans lequel de l'oxyde de cuivre et de l'oxyde d'étain sont ajoutés à ladite masse de verre fondu, la pression partielle d'oxygène dans ladite masse de verre fondu étant comprise entre 10⁻⁷ et 10⁻⁴, puis,
- former à partir de ladite masse de verre fondu des objets en verre, notamment des bouteilles ou flacons, puis,
- faire subir auxdits objets en verre un traitement thermique de manière à développer une teinte rouge.

2. Procédé selon la revendication 1, tel que la masse de verre fondu est obtenue en mélangeant des matières premières comprenant du sable, du calcaire, du carbonate de sodium et un sulfate, le rapport entre le poids de sulfate (sous forme SO₃) et le poids de sable étant compris entre 0,3 et 0,6%.

3. Procédé selon l'une des revendications précédentes, tel que la teneur massique en oxyde de fer dans la masse de verre fondu est comprise entre 0,012% et 0,05%, notamment entre 0,015% et 0,05%.

4. Procédé selon l'une des revendications précédentes, tel que la pression partielle d'oxygène dans la masse de verre fondu est comprise entre 10⁻⁶ et 10⁻⁴.

5. Procédé selon l'une des revendications précédentes, tel que l'oxyde de cuivre et l'oxyde d'étain sont ajoutés à la masse de verre fondu sous forme de frittes de verre ou d'agglomérés.

6. Procédé selon la revendication précédente, tel que la teneur totale en frittes ou agglomérés est inférieure ou égale à 10%, voire 5% par rapport au poids de verre de base.

7. Procédé selon l'une des revendications 5 ou 6, tel que la fritte contenant de l'oxyde de cuivre contient entre 15 et 30% en poids d'oxyde de cuivre (exprimé sous la forme Cu₂O).

8. Procédé selon l'une des revendications 5 à 7, tel que la fritte contenant l'oxyde de cuivre possède une pression partielle d'oxygène mesurée à une température de 1100°C comprise entre 10⁻⁴ et 10⁻¹, notamment entre 10⁻⁴ et 10⁻².

9. Procédé selon l'une des revendications 5 à 8, tel que la fritte contenant de l'oxyde d'étain contient entre 15 et 30% en poids d'oxyde d'étain (exprimé sous la forme SnO).

10. Procédé selon l'une des revendications 5 à 9, tel que la fritte contenant l'oxyde d'étain possède une pression partielle d'oxygène mesurée à une température de 1100°C comprise ente 10⁻⁹ et 10⁻⁷.

11. Procédé selon l'une des revendications précédentes, tel que de l'oxyde de bismuth (Bi₂O₃) est ajouté à la masse de verre fondu, sous forme de frittes ou d'agglomérés, dans le canal de distribution.

12. Procédé selon l'une des revendications précédentes, tel que le traitement thermique auquel l'objet en verre est soumis de manière à développer la teinte rouge correspond au traitement de recuisson.

## Patentansprüche

1. Verfahren zur Herstellung von rotem Kupferglas, umfassend die Schritte, die darin bestehen:
- eine Masse aus farblosem geschmolzenem, sulfidfreiem Glas, dessen Massengehalt an Eisenoxid zwischen 0,01 und 0,15 % beträgt, zu erhalten, anschließend
- die geschmolzene Glasmasse in einem Verteilerkanal zu befördern, in dem der geschmolzenen Glasmasse Kupferoxid und Zinnoxid zugegeben werden, wobei der Sauerstoffpartialdruck in der geschmolzenen Glasmasse zwischen 10⁻⁷ und 10⁻⁴ beträgt, dann
- aus der geschmolzenen Glasmasse Glasgegenstände, insbesondere Flaschen oder Flakons, zu formen, anschließend
- die Glasgegenstände einer Wärmebehandlung zu unterziehen, um einen roten Farbton zu entwickeln.

2. Verfahren nach Anspruch 1, das derart ist, dass die geschmolzene Glasmasse durch Mischen von Rohstoffen, die Sand, Kalk, Natriumcarbonat und ein Sulfat umfassen, erhalten wird, wobei das Verhältnis zwischen dem Gewicht von Sulfat (in Form von SO₃) und dem Gewicht von Sand zwischen 0,3 und 0,6 % liegt.

3. Verfahren nach einem der vorstehenden Ansprüche, das derart ist, dass der Massengehalt an Eisenoxid in der geschmolzenen Glasmasse zwischen 0,012 % und 0,05 %, insbesondere zwischen 0,015 % und 0,05 % beträgt.

4. Verfahren nach einem der vorstehenden Ansprüche, das derart ist, dass der Sauerstoffpartialdruck in der geschmolzenen Glasmasse zwischen 10⁻⁶ und 10⁻⁴ beträgt.

5. Verfahren nach einem der vorstehenden Ansprüche, das derart ist, dass das Kupferoxid und das Zinnoxid der geschmolzenen Glasmasse in Form von Glasfritten oder von Pellets zugegeben werden.

6. Verfahren nach dem vorstehenden Anspruch, das derart ist, dass der Gesamtgehalt an Fritten oder Pellets weniger als oder gleich 10 %, sogar 5 % bezogen auf das Grundglasgewicht beträgt.

7. Verfahren nach einem der Ansprüche 5 oder 6, das derart ist, dass die Kupferoxid enthaltende Fritte zwischen 15 und 30 Gew.-% Kupferoxid (ausgedrückt in Form von Cu₂O) enthält.

8. Verfahren nach einem der Ansprüche 5 bis 7, das derart ist, dass die das Kupferoxid enthaltende Fritte einen bei einer Temperatur von 1100 °C gemessenen Sauerstoffpartialdruck zwischen 10⁻⁴ und 10⁻¹, insbesondere zwischen 10⁻⁴ und 10⁻² besitzt.

9. Verfahren nach einem der Ansprüche 5 bis 8, das derart ist, dass die Zinnoxid enthaltende Fritte zwischen 15 und 30 Gew.-% Zinnoxid (ausgedrückt in Form von SnO) enthält.

10. Verfahren nach einem der Ansprüche 5 bis 9, das derart ist, dass die das Zinnoxid enthaltende Fritte einen bei einer Temperatur von 1100 °C gemessenen Sauerstoffpartialdruck zwischen 10⁻⁹ und 10⁻⁷ besitzt.

11. Verfahren nach einem der vorstehenden Ansprüche, das derart ist, dass der geschmolzenen Glasmasse Wismutoxid (Bi₂O₃) in Form von Fritten oder Pellets in dem Verteilerkanal zugegeben wird.

12. Verfahren nach einem der vorstehenden Ansprüche, das derart ist, dass die Wärmebehandlung, welcher der Glasgegenstand unterzogen wird, um den roten Farbton zu entwickeln, der Entspannungsbehandlung entspricht.

## Claims

1. A process for manufacturing red glass containing copper that comprises the steps consisting in:
- obtaining a mass of colorless molten glass, free of sulfides, the iron oxide weight content of which is between 0.01 and 0.15%; then
- conveying said mass of molten glass in a feeder channel, in which copper oxide and tin oxide are added to said mass of molten glass, the partial pressure of oxygen in said mass of molten glass being between 10⁻⁷ and 10⁻⁴; then
- forming glass objects, especially bottles or flasks from said mass of molten glass; then
- subjecting said glass objects to a heat treatment so as to develop a red tint.

2. The process as claimed in claim 1, such that the mass of molten glass is obtained by mixing batch materials comprising sand, limestone, sodium carbonate and a sulfate, the ratio of the weight of sulfate (in SO₃ form) to the weight of sand being between 0.3 and 0.6%.

3. The process as claimed in one of the preceding claims, such that the weight content of iron oxide in the mass of molten glass is between 0.012% and 0.05%, in particular between 0.015% and 0.05%.

4. The process as claimed in one of the preceding claims, such that the partial pressure of oxygen in the mass of molten glass is between 10⁻⁶ and 10⁻⁴.

5. The process as claimed in one of the preceding claims, such that the copper oxide and the tin oxide are added to the mass of molten glass in the form of glass frits or agglomerates.

6. The process as claimed in the preceding claim, such that the total content of frits or agglomerates is less than or equal to 10%, or even 5% relative to the weight of base glass.

7. The process as claimed in either of claims 5 and 6, such that the frit containing copper oxide contains between 15 and 30% by weight of copper oxide (expressed in the Cu₂O form).

8. The process as claimed in one of claims 5 to 7, such that the frit containing copper oxide has a partial pressure of oxygen measured at a temperature of 1100°C between 10⁻⁴ and 10⁻¹, in particular between 10⁻⁴ and 10⁻².

9. The process as claimed in one of claims 5 to 8, such that the frit containing tin oxide contains between 15 and 30% by weight of tin oxide (expressed in the SnO form).

10. The process as claimed in one of claims 5 to 9, such that the frit containing tin oxide has a partial pressure of oxygen measured at a temperature of 1100°C between 10⁻⁹ and 10⁻⁷.

11. The process as claimed in one of the preceding claims, such that bismuth oxide (Bi₂O₃) is added to the mass of molten glass, in the form of frits or agglomerates, in the feeder channel.

12. The process as claimed in one of the preceding claims, such that the heat treatment to which the glass object is subjected so as to develop the red tint corresponds to the annealing treatment.
